(19) **Europäisches Patentamt / European Patent Office / Office européen des brevets**

(11) **EP 3 344 505 B1**

(12) **FASCICULE DE BREVET EUROPEEN**

(45) Date de publication et mention
de la délivrance du brevet:
**22.05.2019 Bulletin 2019/21**

(21) Numéro de dépôt: **16744815.8**

(22) Date de dépôt: **08.07.2016**

(51) Int Cl.:
**B62D 15/02** *(2006.01)*     **B60W 30/12** *(2006.01)*
**B60W 50/00** *(2006.01)*     **B60W 10/20** *(2006.01)*

(86) Numéro de dépôt international:
**PCT/FR2016/051760**

(87) Numéro de publication internationale:
**WO 2017/037354 (09.03.2017 Gazette 2017/10)**

(54) **DISPOSITIF ET PROCÉDÉ DE COMMANDE D'UN SYSTÈME D'AIDE A LA CONDUITE POUR LA CORRECTION DE TRAJECTOIRE D'UN VÉHICULE AUTOMOBILE**

VORRICHTUNG UND VERFAHREN ZUR STEUERUNG EINES FAHRERASSISTENZSYSTEMS ZUR KORREKTUR DER FAHRTRICHTUNG EINES KRAFTFAHRZEUGES

DEVICE AND METHOD FOR CONTROLLING A DRIVER ASSISTANCE SYSTEM FOR CORRECTING THE DIRECTION OF TRAVEL OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2015 FR 1558106**

(43) Date de publication de la demande:
**11.07.2018 Bulletin 2018/28**

(73) Titulaire: **Renault s.a.s.**
**92100 Boulogne-Billancourt (FR)**

(72) Inventeur: **MINOIU-ENACHE, Nicoleta**
**78000 Versailles (FR)**

(56) Documents cités:
**DE-A1-102012 100 164**     **US-A1- 2009 153 360**
**US-A1- 2012 316 730**

Printed by Jouve, 75001 PARIS (FR)

**Description**

L'invention concerne un procédé de commande d'un système d'aide à la conduite pour un véhicule automobile se déplaçant sur une voie de circulation, comprenant une fonction de correction de trajectoire destinée au maintien du véhicule dans la voie.

L'invention trouve une application particulièrement avantageuse dans le domaine de la sécurité et le domaine d'aide à la conduite de véhicules automobiles.

Certains véhicules sont dotés d'un système de direction qui comporte une fonction pilotant, par un calculateur de contrôle, un organe qui agit sur cette direction, en délivrant un couple d'assistance spécifique sur la direction pour réaliser une aide au suivi de la voie de circulation, susceptible d'indiquer au conducteur un écart par rapport à la voie normale de circulation, en particulier dans des cas de manque de vigilance, d'endormissement ou malaise. Ces fonctions d'aide à la conduite sont connues sous la terminologie « Lane Departure Avoidance » ou « Lane Keeping Assist » (LKA).

La réalisation de cette fonction repose notamment sur la mesure de la position du véhicule par rapport à sa voie de circulation et, en particulier sur la mesure de l'écart latéral du véhicule par rapport à des marquages latéraux au sol délimitant la voie sur laquelle circule le véhicule et sur la mesure de l'angle de cap relatif du véhicule. Typiquement, ces mesures sont réalisées à l'aide d'une caméra embarquée à l'avant du véhicule et au moyen d'algorithmes de traitement d'image associés à la caméra, capables de détecter les lignes blanches au sol et de fournir l'écart latéral du véhicule par rapport à ces lignes blanches et l'angle de cap relatif du véhicule. Ces mesures peuvent toutefois être erronées. Or, les erreurs de mesure entraînent soit des déclenchements intempestifs, trop tôt ou trop tard, de l'activation de l'assistance pour corriger la trajectoire du véhicule, soit des déplacements latéraux du véhicule pendant la correction, supérieures à l'attente.

Le document de brevet US6556909 présente un système de contrôle de direction automatique qui, grâce à la combinaison de plusieurs équipements dont les roues arrières directrices, la gestion de la répartition du couple aux roues ou encore le contrôle du différentiel à glissement limité, permet de rester dans une voie de circulation sans intervention du conducteur.

Le document de brevet US2007078600 propose un système d'évitement de collision utilisant un jeu invariant basé sur des états de véhicule et des caractéristiques dynamiques. Ce système est utilisable surtout pour des véhicules volant en formation et pour des véhicules complètement autonomes.

Le document de brevet US8095266 décrit un système LKA d'aide au maintien dans la voie équipé d'un compensateur capable de résoudre les problèmes de retard de transmissions des données vidéo fournies par une caméra au calculateur de contrôle, qui fonctionne à une fréquence plus élevée. Dans les systèmes classiques d'aide au maintien dans la voie, une donnée vidéo est utilisée de façon répétée par le calculateur de contrôle en fonction de la rapidité du système d'acquisition et de traitement d'image.

Tous ces procédés de contrôle de trajectoire présentent néanmoins des problèmes de précision liés à l'écart entre la trajectoire attendue du véhicule sur sa voie de circulation et la trajectoire du véhicule mesurée sur cette voie de circulation.

Aussi, l'invention a notamment pour but de remédier aux inconvénients de l'état de la technique en proposant un procédé de commande d'un système d'aide à la conduite pour un véhicule automobile comprenant une fonction de correction de trajectoire du véhicule permettant de corriger la trajectoire d'une manière optimisée.

A cet effet, l'invention concerne un procédé de commande d'un système d'aide à la conduite pour un véhicule automobile comprenant une fonction de correction de la trajectoire du véhicule se déplaçant sur une voie de circulation, ledit procédé comprenant une étape de mesure de l'écart latéral véhicule par rapport à un marquage sur la voie de circulation et une étape de mesure de l'angle de cap relatif correspondant à l'angle entre l'axe longitudinal du véhicule et une ligne de la voie de circulation, à partir d'au moins une caméra équipant le véhicule, et une étape d'activation de la fonction de correction de la trajectoire en fonction de l'écart latéral et de l'angle de cap relatif mesurés, le procédé étant caractérisé en ce qu'il comprend une étape de configuration du déclenchement de l'activation de la fonction de correction de la trajectoire en fonction d'au moins une erreur maximale constatée sur la mesure de l'écart latéral et d'une erreur maximale constatée sur la mesure de l'angle de cap relatif.

De la sorte, la correction de trajectoire peut être activée seulement au moment opportun pour permettre le maintien du véhicule dans la voie de circulation malgré la présence d'erreurs de mesure en provenance de la caméra.

Selon un mode de réalisation, l'étape de configuration du déclenchement de l'activation de la fonction de correction de la trajectoire comprend :

- une étape de prédétermination d'une valeur de déplacement latéral maximal autorisé pour ledit véhicule pendant l'activation de la fonction de correction de trajectoire, pour différents jeux de paramètres de dynamique du véhicule et de géométrie de la voie de circulation comprenant au moins l'erreur maximale constatée sur la mesure de l'écart latéral et l'erreur maximale constatée sur la mesure de l'angle de cap relatif,
- une étape de stockage d'une table des valeurs prédéterminées de déplacement latéral maximal autorisé pour chaque jeu de paramètres fixé dans l'étape de prédétermination,

l'activation de la fonction de correction de la trajectoire étant déclenchée lorsqu'une valeur de déplacement latéral maximal autorisé extraite de la table de valeurs préalablement stockée en fonction de conditions courantes de roulage du véhicule est supérieure à une valeur de seuil donnée.

Avantageusement, les erreurs maximales constatées sur la mesure de l'écart latéral et sur la mesure de l'angle de cap relatif sont calculées statistiquement au cours d'une phase préalable de roulage du véhicule.

Avantageusement, les paramètres de dynamique du véhicule comprennent au moins un paramètre parmi : la vitesse du véhicule selon l'axe longitudinal, la vitesse de lacet, l'angle que font les roues avant avec l'axe longitudinal du véhicule.

Avantageusement, les paramètres de géométrie de la voie comprennent au moins la courbure maximale de la voie de circulation.

Avantageusement, les valeurs prédéterminées de déplacement latéral maximal autorisé sont calculées, pour chaque jeu de paramètres fixés, en fonction d'un état initial du véhicule au déclenchement de l'activation de la fonction de correction de la trajectoire, ledit état initial étant contenu dans un ensemble de points initiaux borné dans un repère défini par l'angle de cap relatif et l'écart latéral, et par la détermination d'un ensemble atteignable de toutes les trajectoires possibles du véhicule partant dudit état initial du véhicule.

De préférence, la détermination dudit ensemble atteignable de toutes les trajectoires possibles du véhicule partant dudit état initial du véhicule comprend une approximation dudit ensemble atteignable par un ensemble invariant ellipsoïdal.

L'invention concerne également un dispositif de commande d'un système d'aide à la conduite pour un véhicule automobile se déplaçant sur une voie de circulation, comprenant un système de direction actif, une caméra équipant le véhicule, associée à des moyens de traitement d'image pour fournir au moins une mesure de l'écart latéral du véhicule par rapport à un marquage sur la voie de circulation et une mesure de l'angle de cap relatif correspondant à l'angle entre l'axe longitudinal du véhicule et une ligne de la voie de circulation, un calculateur de contrôle pilotant le système de direction actif pour réaliser une fonction de correction de la trajectoire en fonction de l'écart latéral et de l'angle de cap relatif mesurés, caractérisé en ce qu'il comprend des moyens pour déclencher l'activation de la fonction de correction de la trajectoire en fonction d'au moins une erreur maximale constatée sur la mesure de l'écart latéral et d'une erreur maximale constatée sur la mesure de l'angle de cap relatif.

Avantageusement, le dispositif comprend des moyens de stockage d'une table de valeurs prédéterminées de déplacement latéral maximal autorisé pour ledit véhicule pendant l'activation de la fonction de correction de trajectoire, pour différents jeux de paramètres de dynamique du véhicule et de géométrie de la voie de circulation comprenant au moins l'erreur maximale constatée sur la mesure de l'écart latéral et l'erreur maximale constatée sur la mesure de l'angle de cap relatif, ledit calculateur de contrôle étant conçu pour déclencher l'activation de la fonction de correction de la trajectoire lorsqu'une valeur de déplacement latéral maximal autorisé fournie par la table de valeurs selon des conditions courantes de roulage du véhicule est supérieure à une valeur de seuil donnée.

L'invention concerne encore un véhicule comprenant un dispositif selon l'invention.

D'autres particularités et avantages de l'invention ressortiront à la lecture de la description faite ci-après d'un mode de réalisation particulier de l'invention, donné à titre indicatif mais non limitatif, en référence aux figures annexées dans lesquelles :

- la Figure 1 est une représentation du modèle bicyclette appliqué à un véhicule circulant dans une voie ;
- la Figure 2 illustre une représentation du schéma de principe pour la stratégie embarquée de décision d'activation de la fonction de correction de trajectoire conforme à l'invention ;
- la Figure 3 illustre une représentation de l'approximation de l'ensemble atteignable des trajectoires du véhicule à partir d'une région de « conduite normale » et de la relation avec le déplacement latéral maximal sur la voie de circulation.

Les variables qui seront utilisées dans la suite de la description sont listées ci-après :

$m$ (kg) : Masse totale du véhicule ;
$J$ (N.m) : Inertie du véhicule autour d'un axe vertical passant par son centre de gravité CG ;
$l_f$ (m) : Distance de CG à l'essieu avant du véhicule ;
$l_r$ (m) : Distance de CG à l'essieu arrière du véhicule ;
$a$ (m) : Moyenne des longueurs des essieux avant et arrière du véhicule ;
$cf$ (N/rad) : Rigidité de dérive avant ;
$c_r$ (N/rad) : Rigidité de dérive arrière ;
$\delta_f$ (rad) : Angle de braquage des roues avant, soit l'angle que font les roues avant avec l'axe longitudinal du véhicule ;

r (rad/s) : Vitesse de lacet, soit la vitesse de rotation du véhicule autour de son centre de gravité CG suivant un axe vertical ;

$\Psi$ (rad/s) : Angle de cap du véhicule en repère absolu ;

$\Psi_d$ (rad/s) : Angle de cap de la tangente à la trajectoire de référence en repère absolu ;

$\Psi_L$ (rad/s) : Angle de cap relatif entre l'axe du véhicule et la tangente à la trajectoire de référence ;

$y_L^{CG}$ (m) : Ecart latéral entre l'axe du véhicule et la tangente à la trajectoire au centre de gravité du véhicule ;

$y_L$ (m) : Ecart latéral entre l'axe du véhicule et la tangente à la trajectoire en avant du véhicule ;

ls (m) : La distance de visée pour la mesure de l'écart latéral en avant du véhicule ;

$\beta$ (rad) : Angle de dérive, soit l'angle que fait le vecteur vitesse du véhicule avec son axe longitudinal ;

$(v_{CG})^v$ : Vecteur vitesse du véhicule ;

v (m/s) : Vitesse du véhicule selon l'axe longitudinal ;

u (m/s) : Vitesse du véhicule selon l'axe transversal ;

$\rho_{ref}$ : Courbure de la voie ;

L (m) : Largeur de la voie de circulation ;

VehWidth (m) : Largeur totale du véhicule ;

$r^N$ (rad/s) : Vitesse de lacet délimitant le domaine où le vecteur d'état se trouve habituellement pour une conduite normale ;

$\Psi_L^N$ (rad/s) : Angle de cap relatif délimitant le domaine où le vecteur d'état se trouve habituellement pour une conduite normale ;

$y_L^N$ (m) : Ecart latéral délimitant le domaine où le vecteur d'état se trouve habituellement pour une conduite normale ;

$\beta^N$ (rad) : Angle de dérive délimitant le domaine où le vecteur d'état se trouve habituellement pour une conduite normale ;

$e_\psi^{\max}$ (rad) : Erreur maximale constatée sur la mesure d'angle de cap relatif ;

$e_y^{\max}$ (rad) : Erreur maximale constatée sur la mesure de l'écart latéral.

Dans le but de modéliser le véhicule, on fait les hypothèses suivantes :

H1 : Les angles $\beta$ et $\delta_f$ sont petits, tels que sin(angle)$\approx$angle et cos(angle) $\approx$1 ;

H2 : $(v_{CG})^v=(v,u,0)^T=(v, v*(\sin \beta), 0)^T \approx (v, v*\beta, 0)^T$

H3 : Le véhicule roule à une vitesse longitudinale v constante ;

H4 : Les forces de contact des pneus sont linéaires avec les dérives des pneus et en fonction de la rigidité des pneus ;

H5 : $yL \approx y_L^{CG} + ls* \Psi_L$, où $\Psi_L = \Psi - \Psi_d$

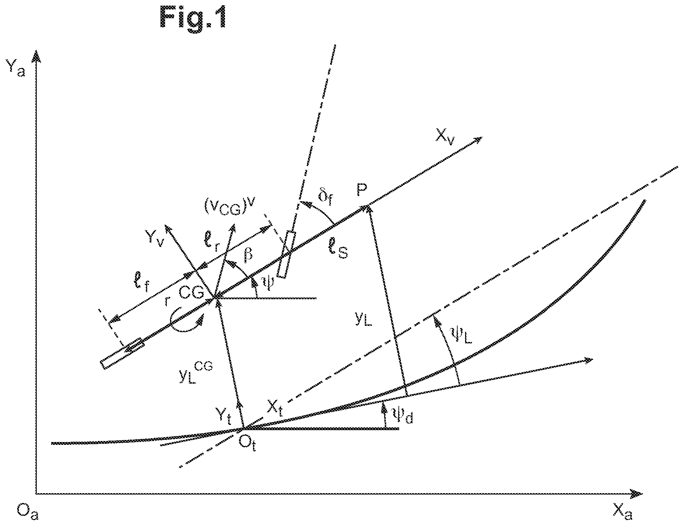

L'équation d'état du modèle « bicyclette » du véhicule retenu avec deux roues directrices, tel que représenté à la figure 1, est donnée ci-après par l'équation suivante :

$$\begin{pmatrix} \dot{\beta} \\ \dot{r} \\ \dot{\Psi}_L \\ \dot{y}_L \end{pmatrix} = \begin{pmatrix} a_{11} & a_{12} & 0 & 0 \\ a_{21} & a_{22} & 0 & 0 \\ 0 & 1 & 0 & 0 \\ v & l_S & v & 0 \end{pmatrix} \begin{pmatrix} \beta \\ r \\ \Psi_L \\ y_L \end{pmatrix} +$$

$$+ \begin{pmatrix} b_{11}^{\delta_f} \\ b_{21}^{\delta_f} \\ 0 \\ 0 \end{pmatrix} \delta_f$$

$$+ \begin{pmatrix} 0 \\ 0 \\ -v \\ 0 \end{pmatrix} \rho_{ref}$$

En référence à la figure 1, la trajectoire de référence est représentée dans un repère absolu $\{O_a, X_a, Y_a\}$. A chaque instant t, la position du véhicule est repérée par rapport à un point $O_t$ de la trajectoire qui constitue l'origine d'un repère relatif cinématique $\{O_t, X_t, Y_t\}$ dans lequel l'axe $X_t$ est tangent à la trajectoire au point $O_t$. L'axe X t fait un angle $\Psi_d$ avec l'axe $X_a$ du repère absolu.

Lorsque le véhicule suit parfaitement sa trajectoire à l'instant t, le centre de gravité CG est confondu avec le point $O_t$ de la trajectoire. Ce n'est pas le cas lorsque le centre de gravité CG est déporté sur l'axe $Y_t$ dans le plan de la figure 1 qui est perpendiculaire à l'axe $X_t$.

Le centre de gravité CG constitue l'origine d'un repère relatif lié $\{CG, X_v, Y_v\}$ au véhicule dans lequel l'axe $X_v$ est colinéaire à la barre à laquelle le véhicule est assimilé dans le modèle bicyclette. Le repère relatif lié $\{CG, X_v, Y_v\}$ fait un angle $\Psi_L$ avec le repère relatif cinématique $\{O_t, X_t, Y_t\}$. La valeur de l'angle $\Psi_L$ est nulle dans le cas idéal où le véhicule est dirigé selon la tangente à la trajectoire. Dans le cas contraire, une valeur non nulle de l'angle $\Psi_L$ constitue un écart de trajectoire.

Par rapport au repère absolu $\{O_a, X_a, Y_a\}$, le centre de gravité CG se déplace à une vitesse $V_{CG}$ dont le vecteur, exprimé dans le repère relatif lié $\{CG, X_v, Y_v\}$ fait un angle $\beta$ avec l'axe $X_v$.

On pourra se référer notamment aux demandes de brevet FR2992931, FR2991276 pour une présentation plus détaillée du modèle bicyclette, ainsi qu'à l'ouvrage « Vehicle Dynamics and Control » du Professeur Rajesh Rajamani, aux éditions Springer.

Cette équation d'état a comme vecteur d'état l'angle de dérive du véhicule $\beta$, la vitesse de lacet r, l'angle de cap relatif $\Psi_L$ et l'écart latéral par rapport à l'axe de la voie en avant du véhicule $y_L$ :

$$x = \left( \beta, r, \psi_L, y_L \right)^T$$

Les entrées de ce modèle sont l'angle de braquage des roues avant $\delta_f$ commandé par le conducteur ou par l'action de la fonction de correction de trajectoire LKA et la courbure de la route $\rho_{ref}$. Les données mesurées sont la vitesse de lacet r (mesure fournie par exemple par le gyroscope du véhicule) et l'angle de cap relatif $\Psi_L$ ainsi que l'écart latéral par rapport à l'axe de la voie en avant du véhicule $y_L$, ces deux dernières données étant obtenues à partir de la caméra équipant le véhicule et sont fournies par des algorithmes de traitement d'image coopérant avec la caméra. Cependant, les mesures de $\Psi_L$ et de $y_L$ peuvent être erronées et ces erreurs de mesures peuvent générer des activations soit trop tardives, soit trop précoces de la fonction de correction de trajectoire, ou encore un déplacement latéral du véhicule plus important que prévu pendant la mise en oeuvre de la correction de trajectoire. Par ailleurs, l'angle de dérive $\beta$ du vecteur vitesse du véhicule peut être estimé suivant les principes exposés dans le document de brevet WO 2005/061305.

La description détaillée des paramètres du modèle du véhicule est fournie comme suit :

$$a_{11} = -\frac{2(c_r + c_f)}{mv}, \qquad a_{12} = -1 + \frac{2(l_r c_r - l_f c_f)}{mv^2},$$

$$a_{21} = \frac{2(l_r c_r - l_f c_f)}{J}, \qquad a_{22} = -\frac{2(l_r^2 c_r + l_f^2 c_f)}{Jv},$$

$$b_{11}^{\delta_f} = \frac{2c_f}{mv}, \qquad b_{21}^{\delta_f} = \frac{2c_f l_f}{J},$$

$$b_{11}^{\delta_r} = \frac{2c_r}{mv} \qquad b_{21}^{\delta_r} = -\frac{2c_r l_r}{J}$$

Le modèle d'état obtenu comme décrit dans l'équation suivante est linéaire et invariant en temps en considérant une vitesse longitudinale constante. L'entrée de commande est l'angle $\delta_f$. La courbure de la route $\rho_{ref}$ peut être considérée comme une entrée de perturbation.

$\dot{x} = Ax + B_u \delta_f + B_\rho \rho_{ref}$, $B_u$ étant le vecteur d'influence de braquage et $B_\rho$ le vecteur de perturbation.

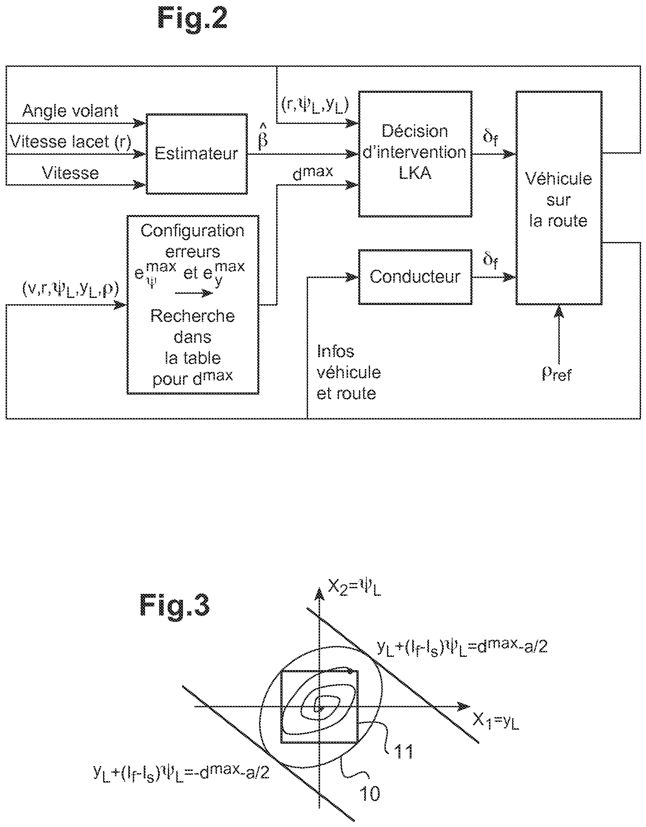

On se réfère à la figure 2, qui illustre une représentation du schéma de principe pour la stratégie embarquée de décision d'activation de la fonction de correction de trajectoire LKA conforme à la l'invention.

Tout d'abord, une phase de calcul dite hors ligne, autrement dit avant utilisation sur le véhicule, est nécessaire. En premier lieu, on calcule le déplacement latéral maximal autorisé du véhicule pendant une correction de trajectoire LKA, en présence des erreurs de mesure de l'écart latéral et de l'angle de cap relatif. Le déplacement latéral maximal est pré-calculé pour un jeu des paramètres de dynamique du véhicule et de géométrie de la voie de circulation comprenant la vitesse, la vitesse de lacet, la courbure maximale de la route et les erreurs de mesure maximales sur la mesure d'angle de cap relatif et sur la mesure de l'écart latéral, et en partant d'un ensemble de points initiaux spécifié.

L'objectif de cette phase de calcul hors ligne est de prédéterminer le déplacement latéral maximal du véhicule d$^{max}$ pendant une correction de trajectoire LKA pour différents jeux de paramètres, partant de l'hypothèse que la caméra équipant le véhicule fournit des mesures erronées pour l'angle de cap relatif et pour l'écart latéral.

On suppose pour ce faire que l'action de la fonction de correction de trajectoire LKA démarre pour un comportement du véhicule contenu dans un ensemble de points initiaux décrit par des limites comme suit :

$$|\beta| \le \beta^N, \quad |r| \le r^N, \quad |\Psi_L| \le \Psi_L^N, \quad |y_L| \le y_L^N$$

Les sommets de cet ensemble de points initiaux borné sont donnés par l'équation suivante :

$$z_i = \left[\pm \beta^N, \pm r^N, \pm \psi_L^N, \pm y_L^N\right]^T$$

On cherche plus précisément à calculer les performances de correction de trajectoire d'une loi de commande LKA déjà synthétisée, en ligne droite comme en virage, en présence éventuelle des erreurs de mesure. Cette loi de commande peut s'énoncer comme suit :

$\delta_f = Kx = k_\beta \beta + k_r r + k_{\psi L} \psi_L + k_{yL} y_L$, les différents coefficients k étant des coefficients de proportionnalité qui peuvent être calculés par différentes méthodes (par exemple par placement des pôles en boucle fermée ou par des optimisations convexes de type LMI (acronyme anglais pour « Linear Matrix Inequalities »), notamment).

Ces performances peuvent être déterminées par le calcul de l'ensemble atteignable en partant de l'ensemble de points initiaux borné. Une image de l'ensemble atteignable 10 est représentée à la figure 3. Ainsi, l'ensemble atteignable 10 contient toutes les trajectoires possibles en partant de la région de « conduite normale » 11 incluse dans l'ensemble des points initiaux borné défini plus haut. Selon un exemple de réalisation, l'ensemble atteignable 10 peut être approximée par un ensemble invariant ellipsoïdal extérieur à celui-ci. D'autres exemples de réalisation avec d'autres approximations de l'ensemble atteignable peuvent être mises en oeuvre, par exemple par des polytopes, zonotopes ou vecteurs d'intervalle.

Pour faire l'estimation de l'ensemble atteignable et calculer l'impact de l'erreur de mesure sur le déplacement latéral maximal, on se fixe un jeu de paramètres de calcul pour les paramètres suivants :

1. L'ensemble des points initiaux borné décrit par ($\beta^N$, $r^N$, $\Psi_L{}^N$, $y_L{}^N$) ;

2. Vitesse du véhicule v ;

3. Courbure maximale de la voie de circulation $\rho^{max}$

4. Erreur maximale constatée sur la mesure d'angle de cap relatif $e_\psi^{max}$ et sur la mesure de l'écart latéral $e_y^{max}$ .

S'agissant de l'erreur maximale constatée sur la mesure d'angle de cap relatif $e_\psi^{max}$ et sur la mesure de l'écart latéral $e_y^{max}$ , ces données sont préférentiellement issues d'une mesure statistique. Ainsi, dans une phase de validation de la caméra équipant le véhicule et de son logiciel de traitement d'image associé, les valeurs des erreurs de mesure de l'écart latéral et de l'angle de cap relatif par la caméra sont calculées de manière statistique au cours de phases de roulage du véhicule. Cette phase de validation est par exemple menée avant la commercialisation du véhicule. Les estimations des erreurs $e_\psi^{max}$ et $e_y^{max}$ calculées statistiquement sont fournies en tant que paramètres de configuration du véhicule.

A noter que d'autres erreurs pourraient être introduites telles que, par exemple, l'erreur sur la vitesse de lacet mesurée.

Ensuite, pour un jeu de paramètres fixé, on calcule un déplacement latéral maximal $d^{max}$ de la manière suivante. En supposant la présence d'erreurs de mesure uniquement sur la mesure de l'angle de cap relatif et sur la mesure de l'écart latéral, on peut écrire :

$$\hat{\psi}_L = \psi_L + e_\psi \text{ et } \hat{y}_L = y_L + e_y$$

L'angle de braquage de consigne des roues avant commandé par l'action de la fonction de correction de trajectoire devient alors :

$$\delta_f = Kx + k_{\psi_L} e_\psi + k_{y_L} e_y$$

On suppose de plus que les valeurs des erreurs de mesure d'angle de cap relatif et d'écart latéral liées à la caméra, respectivement $e_\psi$ et $e_y$, sont bornées en valeurs absolues et, en outre, que la valeur maximale absolue de la courbure de la voie, également liée à la caméra, est limitée :

$$\left| e_\psi \right| \le e_\psi^{max} \ ; \ \left| e_y \right| \le e_y^{max} \ ; \ \left| \rho_{ref} \right| \le \rho_{ref}^{max}$$

On peut donc écrire ces variables en fonction de trois paramètres normés :

$$\left| w_1 \right| \le 1 \ ; \ \left| w_2 \right| \le 1 \text{ et } \left| w_3 \right| \le 1$$

Avec :

$$w_1 = \frac{\rho_{ref}}{\rho_{ref}^{max}} \ ; \ w_2 = \frac{e_\psi}{e_\psi^{max}} \ ; \ w_3 = \frac{e_y}{e_y^{max}}$$

L'angle de braquage de consigne devient alors :

$$\delta_f = Kx + k_{\psi_L} e_\psi^{max} w_2 + k_{y_L} e_y^{max} w_3$$

et le système en boucle fermée peut s'écrire de la manière suivante:

$$\dot{x} = (A + B_u K)x + B_u k_{\psi_L} e_\psi^{max} w_2 + B_u k_{y_L} e_y^{max} w_3 + B_\rho \rho_{ref}^{max} w_1$$

Pour ce système en boucle fermée, on cherche une fonction définie positive :

$V(x) = x^T Px$ avec $P = P^T$ et $P > 0$ tel que $\dfrac{\partial V}{\partial x}\langle 0$ pour tous $x \in R^4$ *tel* que $x^T Px \rangle 1$ ; $w_1 \in R$ tel que $|w_1| \leq 1$ ; $w_2 \in R$ tel que $|w_2| \leq 1$ ; $w_3 \in R$ tel que $|w_3| \leq 1$

A l'aide de la méthode appelée S-Procedure dans la littérature spécialisée, cela revient à dire que l'on cherche $V(x)$ tel que :

$$\frac{\partial V}{\partial x}\langle \alpha_1(1 - x^T Px) + \alpha_2(w_1^T w_1 - 1) + \alpha_3(w_2^T w_2 - 1) + \alpha_4(w_3^T w_3 - 1)$$

pour des paramètres $\alpha_i\rangle 0$ pour i=1,2,3,4.

Cette même équation s'écrit par ailleurs :

$$\frac{\partial V}{\partial x}\langle \alpha_1 - \alpha_2 - \alpha_3 - \alpha_4 - \alpha_1 x^T Px + \alpha_2 w_1^T w_1 + \alpha_3 w_2^T w_2 + \alpha_4 w_3^T w_3$$

La première partie de cette équation se développe comme suit :

$$\frac{\partial V}{\partial x} = \dot{x}^T Px + x^T P\dot{x} =$$

$$\left[(A + B_u K)x + B_u k_{\psi_L} e_\psi^{max} w_2 + B_u k_{y_L} e_y^{max} w_3 + B_\rho \rho_{ref}^{max} w_1\right]^T Px +$$

$$x^T P\left[(A + B_u K)x + B_u k_{\psi_L} e_\psi^{max} w_2 + B_u k_{y_L} e_y^{max} w_3 + B_\rho \rho_{ref}^{max} w_1\right]$$

En utilisant les deux inégalités précédentes, on obtient l'inégalité matricielle suivante :

$$\begin{pmatrix} Q(A+B_uK)^T + (A+B_uK)Q + \alpha_1 Q & B_\rho \rho_{ref}^{max} & B_u k_{\psi_L} e_\psi^{max} & B_u k_{y_L} e_y^{max} & 0 \\ \rho_{ref}^{max} B_\rho^T & -\alpha_2 & 0 & 0 & 0 \\ k_{\psi_L} e_\psi^{max} B_u^T & 0 & \alpha_3 & 0 & 0 \\ k_{y_L} e_y^{max} B_u^T & 0 & 0 & -\alpha_4 & 0 \\ 0 & 0 & 0 & 0 & \alpha_2 + \alpha_3 + \alpha_4 - \alpha_1 \end{pmatrix} \prec 0$$

dont les inconnues sont la matrice Q<0, Q symétrique et Q=P$^{-1}$ et $\alpha_i$>0 pour i=1,2,3,4. On cherche alors une solution faisable de cette inégalité matricielle. Autrement dit, on cherche l'ensemble invariant qui ne sera pas quitté par la trajectoire corrigée du véhicule malgré les perturbations représentées par les erreurs de mesures et par la courbure de la route. Dans cet ensemble, il faut inclure naturellement la zone de démarrage de la correction de trajectoire. Pour rappel, on estime qu'au moment du déclenchement de l'activation de la fonction de correction de la trajectoire, l'état du véhicule se trouve dans la région de « conduite normale » incluse dans l'ensemble de points initiaux borné tel que défini précédemment (figure 3), définissant cette zone de démarrage. En minimisant l'ensemble invariant contenant cet ensemble de points initiaux, on minimise alors le dépassement de la trajectoire du véhicule en dehors de cette région. L'ensemble de points initiaux borné est défini par des plages avec des valeurs minimales et maximales sur les variables d'état, plages estimées très probables pour le moment d'activation de la correction :

$$-\beta^N \leq \beta \leq \beta^N$$

$$-r^N \leq r \leq r^N$$

$$-\psi_L^N \leq \psi_L \leq \psi_L^N$$

$$-y_L^N \leq y_L \leq y_L^N$$

Ceci se traduit par des points :

$$z_i^N = \left(\pm\beta^N, \pm r^N, \pm\psi_L^N, \pm y_L^N\right)^T, i=1,\dots,8$$

qui doivent être inclus dans l'ensemble invariant référencé 10 sur la figure 3.

Le problème d'optimisation qui inclut cette contrainte s'écrit de la manière suivante :

$$\begin{pmatrix} 1 & (z_i^N)^T \\ z_i^N & Q \end{pmatrix} \succ 0, i=1,\dots,8$$

Une fois le problème d'optimisation ci-dessus résolu, on peut calculer le déplacement latéral maximal du véhicule en présence des erreurs de mesure et de la courbure:

$$d^{\max} = \frac{1}{2}\left(\sqrt{fQfT}\right) + a$$

où

$$f = \left[0,0,2\left(l_f - l_S\right),2\right]$$

On prévoit avantageusement d'éliminer tout calcul en ligne et d'utiliser à la place une table de valeurs stockée localement au niveau du véhicule et mémorisant l'ensemble des valeurs de déplacement latéral maximal autorisé pendant l'activation de la fonction de correction de trajectoire, pour différents jeux des paramètres (v, $\beta^N$, $r^N$, $\Psi_L^N$, $y_L^N$, $\rho^{\max}$, $e_\psi^{\max}$ et $e_y^{\max}$). Ainsi, à titre d'exemple, le problème d'optimisation est à calculer pour des combinaisons (v, $\beta^N$, $r^N$, $\Psi_L^N$, $y_L^N$, $\rho^{\max}$, $e_\psi^{\max}$ et $e_y^{\max}$) comme suit :

- v=$v_{min}$, v=$v_{min}$+0.5m/s, v=$v_{min}$+1m/s, ..., v=$v_{max}$
- $\beta^N$=-$\beta^N_{min}$, $\beta^N$=-$\beta N_{min}$+0.5°, $\beta^N$=-$\beta N_{min}$+1°,..., $\beta^N$=$\beta^N_{max}$
- $r^N$=-$r^N_{min}$, $r^N$=-$r^N_{min}$+0.5°/s, $r^N$=-$r^N_{min}$+1°/s,..., $r^N$=$r^N_{max}$
- $\Psi_L^N$=-$\Psi_L N_{min}$, $\Psi_L^N$=-$\Psi_L^N_{min}$+0.5°, $\Psi_L^N$=-$\Psi_L^N_{min}$+1°,..., $\Psi_L^N$=$\Psi_L^N_{max}$
- $y_L^N$=-$y_L^N_{min}$, $y_L^N$=-$y_L^N_{min}$+0.1m, $y_L^N$=-$y_L N_{min}$+0.2m,..., $y_L^N$=$y_L^N_{max}$
- $\rho^{\max}$=0, $\rho^{\max}$=1/1000m, $\rho^{\max}$=1/800m, $\rho^{\max}$=1/600m ..., $\rho^{\max}$=1/50m
- $e_\psi^{\max}$=-pi/6, $e_\psi^{\max}$=-pi/6+pi/100,... $e_\psi^{\max}$=+pi/6

$e_y^{\max}$=-0.5, $e_y^{\max}$=-0.5+0.01,... $e_y^{\max}$=0.5

Pour chaque combinaison possible, la valeur $d^{max}$ est mémorisée dans la table. Par la suite, en temps réel, pendant le roulage du véhicule, à chaque pas de temps, les mesures de (v, $\beta$, r, $\Psi_L$, $y_L$, $\rho$, $\delta f$) et les erreurs maximales constatées sur les mesure d'angle de cap relatif et d'écart latéral $e_\psi^{\max}$ et $e_y^{\max}$ permettent de retrouver et d'extraire de la table de valeurs préalablement mémorisée la valeur $d^{max}$. Si la valeur $d^{max}$ ainsi extraite de la table devient supérieure à une valeur de seuil donnée, par exemple correspondant selon un exemple de réalisation à une demi-largeur de la voie de circulation, l'activation de la correction de trajectoire doit être immédiatement déclenchée pour éviter la sortie de la voie, sauf si le conducteur a mis le clignotant par exemple.

Ainsi, la stratégie proposée d'activation de la loi de commande déjà synthétisée implémente la fonction de

correction de trajectoire prend en compte les erreurs sur les mesures de l'angle de cap relatif et de l'écart latéral en avant du véhicule fournies par la caméra et son logiciel de traitement d'image associé, en calculant a priori des bornes ou valeurs maximales autorisées pendant la correction pour le déplacement latéral du véhicule, correspondant aux erreurs maximales constatées sur les mesures de l'angle de cap relatif et de l'écart latéral, de sorte que la décision d'activer la correction est déclenchée seulement quand une valeur prédéterminée du déplacement latéral maximal autorisé extraite de la table des valeurs du déplacement maximal en fonction de la dynamique instantanée du véhicule, dépasse un seuil donné.

Cette stratégie permet ainsi de calculer la dégradation des performances d'une assistance à la conduite de type LKA suite aux erreurs sur les mesures fournies par les algorithmes de traitement d'image associés à la caméra équipant le véhicule. En tenant compte des possibles erreurs de mesures, une valeur de déplacement latéral maximal autorisé de la trajectoire du véhicule pendant la correction est calculée à tout moment et permet de déterminer le moment d'activation de la correction de trajectoire pour empêcher les sorties de voie.

## Revendications

1. Procédé de commande d'un système d'aide à la conduite pour un véhicule automobile comprenant une fonction de correction de la trajectoire du véhicule se déplaçant sur une voie de circulation, ledit procédé comprenant une étape de mesure de l'écart latéral du véhicule ($Y_L$) par rapport à un marquage sur la voie de circulation et une étape de mesure de l'angle de cap relatif ($\Psi_L$) correspondant à l'angle entre l'axe longitudinal du véhicule et une ligne de la voie de circulation, à partir d'au moins une caméra équipant le véhicule, et une étape d'activation de la fonction de correction de la trajectoire en fonction de l'écart latéral et de l'angle de cap relatif mesurés, le procédé étant **caractérisé en ce qu'**il comprend une étape de configuration du déclenchement de l'activation de la fonction de correction de la trajectoire en fonction d'au moins une erreur maximale constatée sur la mesure de l'écart latéral $\left( e_y^{\max} \right)$ et d'une erreur maximale constatée sur la mesure de l'angle de cap relatif $\left( e_\psi^{\max} \right)$.

2. Procédé selon la revendication 1, **caractérisé en ce que** l'étape de configuration du déclenchement de l'activation de la fonction de correction de la trajectoire comprend :

   - une étape de prédétermination de valeurs de déplacement latéral maximal ($d^{\max}$) autorisé pour ledit véhicule pendant l'activation de la fonction de correction de trajectoire, pour différents jeux de paramètres de dynamique du véhicule et de géométrie de la voie de circulation comprenant au moins l'erreur maximale constatée sur la mesure de l'écart latéral et l'erreur maximale constatée sur la mesure de l'angle de cap relatif,
   - une étape de stockage d'une table des valeurs prédéterminées de déplacement latéral maximal autorisé pour chaque jeu de paramètres fixé dans l'étape de prédétermination,

   l'activation de la fonction de correction de la trajectoire étant déclenchée lorsqu'une valeur de déplacement latéral maximal autorisé ($d^{\max}$) extraite de la table de valeurs préalablement stockée en fonction de conditions courantes de roulage du véhicule est supérieure à une valeur de seuil donnée.

3. Procédé selon la revendication 2, **caractérisé en ce que** les erreurs maximales constatées sur la mesure de l'écart latéral et sur la mesure de l'angle de cap relatif sont calculées statistiquement au cours d'une phase préalable de roulage du véhicule.

4. Procédé selon l'une quelconque des revendications 2 ou 3, **caractérisé en ce que** les paramètres de dynamique du véhicule comprennent au moins un paramètre parmi : la vitesse du véhicule selon l'axe longitudinal, la vitesse de lacet, l'angle que font les roues avant avec l'axe longitudinal du véhicule.

5. Procédé selon l'une quelconque des revendications 2 à 4, **caractérisé en ce que** les paramètres de géométrie de la voie comprennent au moins la courbure maximale de la voie de circulation.

6. Procédé selon l'une quelconque des revendications 2 à 5, **caractérisé en ce que** les valeurs prédéterminées de déplacement latéral maximal autorisé ($d^{\max}$) sont calculées, pour chaque jeu de paramètres fixés, en fonction d'un état initial du véhicule au déclenchement de l'activation de la fonction de correction de la trajectoire, ledit état initial étant contenu dans un ensemble de points initiaux borné (11) dans un repère défini par l'angle de cap relatif ($\Psi_L$) et l'écart latéral ($y_L$), et par la détermination d'un ensemble atteignable (10) de toutes les trajectoires possibles du véhicule partant dudit état initial du véhicule.

7. Procédé selon la revendication 6, **caractérisé en ce que** la détermination dudit ensemble atteignable (10) de toutes les trajectoires possibles du véhicule partant dudit état initial du véhicule comprend une approximation dudit ensemble atteignable par un ensemble invariant ellipsoïdal.

8. Dispositif de commande d'un système d'aide à la conduite pour un véhicule automobile se déplaçant sur une voie de circulation, comprenant un système de direction actif, une caméra équipant le véhicule, associée à des moyens de traitement d'image pour fournir au moins une mesure de l'écart latéral ($Y_L$) du véhicule par rapport à un marquage sur la voie de circulation et une mesure de l'angle de cap relatif ($\Psi_L$) correspondant à l'angle entre l'axe longitudinal du véhicule et une ligne de la voie de circulation, un calculateur de contrôle pilotant le système de direction actif pour réaliser une fonction de correction de la trajectoire en fonction de l'écart latéral et de l'angle de cap relatif mesurés, **caractérisé en ce qu'**il comprend des moyens pour déclencher l'activation de la fonction de correction de la trajectoire en fonction d'au moins une erreur maximale constatée sur la mesure de l'écart latéral $\left( e_y^{\max} \right)$ et d'une erreur maximale constatée sur la mesure de l'angle de cap relatif $\left( e_\psi^{\max} \right)$.

9. Dispositif selon la revendication 8, **caractérisé en ce qu'**il comprend des moyens de stockage d'une table de valeurs prédéterminées de déplacement latéral maximal autorisé ($d^{max}$) pour ledit véhicule pendant l'activation de la fonction de correction de trajectoire, pour différents jeux de paramètres de dynamique du véhicule et de géométrie de la voie de circulation comprenant au moins l'erreur maximale constatée sur la mesure de l'écart latéral $\left( e_y^{\max} \right)$ et l'erreur maximale constatée sur la mesure de l'angle de cap relatif $\left( e_\psi^{\max} \right)$, ledit calculateur de contrôle étant conçu pour déclencher l'activation de la fonction de correction de la trajectoire lorsqu'une valeur de déplacement latéral maximal autorisé ($d^{max}$) fournie par la table de valeurs selon des conditions courantes de roulage du véhicule est supérieure à une valeur de seuil donnée.

10. Véhicule comprenant un dispositif selon l'une quelconque des revendications 8 ou 9.

**Patentansprüche**

1. Verfahren zur Steuerung eines Fahrerassistenzsystems für ein Kraftfahrzeug, welches eine Funktion zur Korrektur der Trajektorie des sich auf einer Fahrbahn bewegenden Fahrzeugs umfasst, wobei das Verfahren einen Schritt der Messung des seitlichen Abstands des Fahrzeugs ($Y_L$) in Bezug auf eine Markierung auf der Fahrbahn und einen Schritt der Messung des relativen Fahrtrichtungswinkels ($\Psi_L$), der dem Winkel zwischen der Längsachse des Fahrzeugs und einer Linie der Fahrbahn entspricht, mithilfe wenigstens einer Kamera, mit der das Fahrzeug ausgestattet ist, und einen Schritt der Aktivierung der Funktion zur Korrektur der Trajektorie in Abhängigkeit von dem seitlichen Abstand und dem relativen Fahrtrichtungswinkel, die gemessen wurden, umfasst, wobei das Verfahren **dadurch gekennzeichnet ist, dass** es einen Schritt der Konfiguration der Auslösung der Aktivierung der Funktion zur Korrektur der Trajektorie in Abhängigkeit von wenigstens einem festgestellten maximalen Fehler bei der Messung des seitlichen Abstands $\left( e_y^{\max} \right)$ und einem festgestellten maximalen Fehler bei der Messung des relativen Fahrtrichtungswinkels $\left( e_\psi^{\max} \right)$ umfasst.

2. Verfahren nach Anspruch 1, **dadurch gekennzeichnet, dass** der Schritt der Konfiguration der Auslösung der Aktivierung der Funktion zur Korrektur der Trajektorie umfasst:

- einen Schritt der Vorgabe von Werten der zulässigen maximalen seitlichen Bewegung ($d^{max}$) für das Fahrzeug während der Aktivierung der Funktion zur Korrektur der Trajektorie für verschiedene Sätze von Parametern der Dynamik des Fahrzeugs und der Geometrie der Fahrbahn, welche wenigstens den festgestellten maximalen Fehler bei der Messung des seitlichen Abstands und den festgestellten maximalen Fehler bei der Messung des relativen Fahrtrichtungswinkels umfassen,
- einen Schritt der Speicherung einer Tabelle der vorgegebenen Werte der zulässigen maximalen seitlichen Bewegung für jeden Satz von Parametern, der im Schritt der Vorgabe festgelegt wurde,

wobei die Aktivierung der Funktion zur Korrektur der Trajektorie ausgelöst wird, wenn ein Wert der zulässigen maximalen seitlichen Bewegung (d^max), der aus der zuvor in Abhängigkeit von aktuellen Fahrbedingungen des Fahrzeugs gespeicherten Tabelle von Werten entnommen wurde, größer als ein gegebener Schwellenwert ist.

3. Verfahren nach Anspruch 2, **dadurch gekennzeichnet, dass** die festgestellten maximalen Fehler bei der Messung des seitlichen Abstands und bei der Messung des relativen Fahrtrichtungswinkels während einer vorhergehenden Fahrphase des Fahrzeugs statistisch berechnet werden.

4. Verfahren nach einem der Ansprüche 2 oder 3, **dadurch gekennzeichnet, dass** die Parameter der Dynamik des Fahrzeugs wenigstens einen Parameter umfassen von: der Geschwindigkeit des Fahrzeugs entlang der Längsachse, der Giergeschwindigkeit, dem Winkel, den die Vorderräder mit der Längsachse des Fahrzeugs bilden.

5. Verfahren nach einem der Ansprüche 2 bis 4, **dadurch gekennzeichnet, dass** die Parameter der Geometrie der Fahrbahn wenigstens die maximale Krümmung der Fahrbahn umfassen.

6. Verfahren nach einem der Ansprüche 2 bis 5, **dadurch gekennzeichnet, dass** die vorgegebenen Werte der zulässigen maximalen seitlichen Bewegung (d^max) für jeden Satz von festgelegten Parametern in Abhängigkeit von einem Anfangszustand des Fahrzeugs bei der Auslösung der Aktivierung der Funktion zur Korrektur der Trajektorie berechnet werden, wobei dieser Anfangszustand in einer beschränkten Menge von Anfangspunkten (11) in einem durch den relativen Fahrtrichtungswinkel ($\Psi_L$) und den seitlichen Abstand ($y_L$) definierten Koordinatensystem enthalten ist, und durch die Bestimmung einer erreichbaren Menge (10) aller möglichen Trajektorien des Fahrzeugs, die von diesem Anfangszustand des Fahrzeugs ausgehen.

7. Verfahren nach Anspruch 6, **dadurch gekennzeichnet, dass** die Bestimmung der erreichbaren Menge (10) aller möglichen Trajektorien des Fahrzeugs, die von diesem Anfangszustand des Fahrzeugs ausgehen, eine Approximation dieser erreichbaren Menge durch eine invariante ellipsoidische Menge umfasst.

8. Vorrichtung zur Steuerung eines Fahrerassistenzsystems für ein sich auf einer Fahrbahn bewegendes Kraftfahrzeug, welche ein aktives Lenksystem, eine Kamera, mit der das Fahrzeug ausgerüstet ist und die mit Bildverarbeitungsmitteln gekoppelt ist, um wenigstens einen Messwert des seitlichen Abstands des Fahrzeugs ($Y_L$) in Bezug auf eine Markierung auf der Fahrbahn und einen Messwert des relativen Fahrtrichtungswinkels ($\Psi_L$), der dem Winkel zwischen der Längsachse des Fahrzeugs und einer Linie der Fahrbahn entspricht, zu liefern, einen Steuerungsrechner, der das aktive Lenksystem steuert, um eine Funktion zur Korrektur der Trajektorie in Abhängigkeit von dem seitlichen Abstand und dem relativen Fahrtrichtungswinkel, die gemessen wurden, zu realisieren, umfasst, **dadurch gekennzeichnet, dass** sie Mittel zum Auslösen der Aktivierung der Funktion zur Korrektur der Trajektorie in Abhängigkeit von wenigstens einem festgestellten maximalen Fehler bei der Messung des seitlichen Abstands ($e_y^{\max}$) und einem festgestellten maximalen Fehler bei der Messung des relativen Fahrtrichtungswinkels ($e_\psi^{\max}$) umfasst.

9. Vorrichtung nach Anspruch 8, **dadurch gekennzeichnet, dass** sie Mittel umfasst zur Speicherung einer Tabelle von vorgegebenen Werten der zulässigen maximalen seitlichen Bewegung (d^max) für das Fahrzeug während der Aktivierung der Funktion zur Korrektur der Trajektorie für verschiedene Sätze von Parametern der Dynamik des Fahrzeugs und der Geometrie der Fahrbahn, welche wenigstens den festgestellten maximalen Fehler bei der Messung des seitlichen Abstands ($e_y^{\max}$) und den festgestellten maximalen Fehler bei der Messung des relativen Fahrtrichtungswinkels ($e_\psi^{\max}$) umfassen, wobei der Steuerungsrechner dafür ausgelegt ist, die Aktivierung der Funktion zur Korrektur der Trajektorie auszulösen, wenn ein Wert der zulässigen maximalen seitlichen Bewegung (d^max), der von der Tabelle von Werten gemäß den aktuellen Fahrbedingungen des Fahrzeugs geliefert wird, größer als ein gegebener Schwellenwert ist.

10. Fahrzeug, welches eine Vorrichtung nach einem der Ansprüche 8 oder 9 umfasst.

**Claims**

1.  Method for controlling a driver assistance system for aiding driving of an automotive vehicle comprising a function for correcting the trajectory of the vehicle moving on a travel lane, the said method comprising a step of measuring the lateral deviation of the vehicle ($Y_L$) with respect to a marking on the travel lane and a step of measuring the angle of relative heading ($\Psi_L$) corresponding to the angle between the longitudinal axis of the vehicle and a line of the travel lane, on the basis of at least one camera fitted to the vehicle, and a step of activating the function for correcting the trajectory as a function of the measured lateral deviation and of the measured angle of relative heading, the method being **characterized in that** it comprises a step of configuring the triggering of the activation of the function for correcting the trajectory as a function of at least one maximum error observed in the measurement of the lateral deviation ($e_y^{max}$) and of a maximum error observed in the measurement of the angle of relative heading ($e_\Psi^{max}$).

2.  Method according to Claim 1, **characterized in that** the step of configuring the triggering of the activation of the function for correcting the trajectory comprises:

    - a step of predetermining values of maximum lateral displacement ($d^{max}$) permitted for the said vehicle during the activation of the trajectory correction function, for various suites of parameters of the dynamics of the vehicle and of geometry of the travel lane comprising at least the maximum error observed in the measurement of the lateral deviation and the maximum error observed in the measurement of the angle of relative heading,
    - a step of storing a table of the predetermined values of permitted maximum lateral displacement for each suite of parameters fixed in the predetermining step,

    the activation of the function for correcting the trajectory being triggered when a value of maximum lateral displacement permitted ($d^{max}$) extracted from the table of values previously stored as a function of current rolling conditions of the vehicle is greater than a given threshold value.

3.  Method according to Claim 2, **characterized in that** the maximum errors observed in the measurement of the lateral deviation and in the measurement of the angle of relative heading are computed statistically in the course of a prior rolling phase of the vehicle.

4.  Method according to either one of Claims 2 or 3, **characterized in that** the dynamics parameters of the vehicle comprise at least one parameter from among: the speed of the vehicle along the longitudinal axis, the yaw rate, the angle that the front wheels make with the longitudinal axis of the vehicle.

5.  Method according to any one of Claims 2 to 4, **characterized in that** the geometry parameters of the lane comprise at least the maximum curvature of the travel lane.

6.  Method according to any one of Claims 2 to 5, **characterized in that** the predetermined values of permitted maximum lateral displacement ($d^{max}$) are computed, for each suite of fixed parameters, as a function of an initial state of the vehicle upon the triggering of the activation of the function for correcting the trajectory, the said initial state being contained in a bounded set of initial points (11) in a frame defined by the angle of relative heading ($\Psi_L$) and the lateral deviation ($y_L$), and by the determination of an attainable set (10) of all the possible trajectories of the vehicle starting from the said initial state of the vehicle.

7.  Method according to Claim 6, **characterized in that** the determination of the said attainable set (10) of all the possible trajectories of the vehicle starting from the said initial state of the vehicle comprises an approximation of the said attainable set by an ellipsoidal invariant set.

8.  Device for controlling a driver assistance system for aiding driving of an automotive vehicle moving on a travel lane, comprising an active steering system, a camera fitted to the vehicle and associated with image processing means to provide at least one measurement of the lateral deviation ($Y_L$) of the vehicle with respect to a marking on the travel lane and a measurement of the angle of relative heading ($\Psi_L$) corresponding to the angle between the longitudinal axis of the vehicle and a line of the travel lane, a command computer piloting the active steering system to carry out a function for correcting the trajectory as a function of the measured lateral deviation and of the measured angle of relative heading, **characterized in that** it comprises means for triggering the activation of the function for correcting the trajectory as a function of at least one maximum error observed in the measurement of the lateral deviation ($e_y^{max}$) and of a maximum error observed in the measurement of the angle of relative heading ($e_\Psi^{max}$).

9. Device according to Claim 8, **characterized in that** it comprises means for storing a table of predetermined values of permitted maximum lateral displacement ($d^{max}$) for the said vehicle during the activation of the trajectory correction function, for various suites of parameters of the dynamics of the vehicle and of geometry of the travel lane comprising at least the maximum error observed in the measurement of the lateral deviation ($e_y^{max}$) and of the maximum error observed in the measurement of the angle of relative heading ($e_\Psi^{max}$), the said command computer being designed to trigger the activation of the function for correcting the trajectory when a value of maximum lateral displacement permitted ($d^{max}$) provided by the table of values according to current rolling conditions of the vehicle is greater than a given threshold value.

10. Vehicle comprising a device according to either one of Claims 8 or 9.

# Fig.1

## Fig.2

## Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6556909 B
- US 2007078600 A
- US 8095266 B
- FR 2992931
- FR 2991276
- WO 2005061305 A

**Littérature non-brevet citée dans la description**

- **PROFESSEUR RAJESH RAJAMANI.** Vehicle Dynamics and Control. Springer